# EUROPEAN PATENT SPECIFICATION

(11) **EP 2 463 322 B1**
(45) Date of publication and mention of the grant of the patent: **07.05.2014**
(21) Application number: 10806430.4
(22) Date of filing: 03.08.2010
(51) Int. Cl.: C08G 65/28, B01F 17/42

(54) **PRODUCTION METHOD FOR NONIONIC SURFACTANT**
HERSTELLUNGSVERFAHREN FÜR EIN NICHTIONISCHES TENSID
PROCÉDÉ DE FABRICATION D'AGENT TENSIO-ACTIF NON IONIQUE

(30) Priority: 04.08.2009 JP 2009181171
(43) Date of publication of application: 13.06.2012
(73) Proprietor: Kao Corporation, Chuo-ku Tokyo 103-8210 (JP)
(72) Inventor: CHIBA Keisuke, Wakayama-shi Wakayama 640-8580 (JP); NISHIMOTO Yoshifumi, Wakayama-shi Wakayama 640-8580 (JP); FUKUSHIMA Tetsuaki, Wakayama-shi Wakayama 640-8580 (JP); KIJIMA Satoru, Wakayama-shi Wakayama 640-8580 (JP)
(74) Representative: HOFFMANN EITLE
(86) International application number: PCT/JP2010/063048
(87) International publication number: WO 2011/016431

(56) References cited:
- EP-A1- 1 120 457
- EP-A2- 0 398 450
- WO-A1-2008/088647
- WO-A1-2008/088647
- JP-A- 3 005 435
- JP-A- 10 296 068
- JP-A- 10 296 068
- JP-A- 2001 011 489
- JP-A- 2001 261 816
- JP-A- 2002 053 895
- JP-A- 2003 265 904
- JP-A- 2005 320 449

## Description

### Field of the invention

The present invention relates to a method for producing a nonionic surfactant.

### Background of the invention

Nonionic surfactants, obtained by the reaction of compounds having active hydrogen such as alcohol with alkylene oxides such as ethylene and propylene oxides to cause addition polymerization, have good properties as a surfactant such as good solubility at low temperature, good stability in hard water, low critical micelle concentration (cmc), and low surface tension at critical micelle concentration (y cmc). These surfactants thus have a wide variety of applications such as a detergent, an emulsifier, a penetrating agent, and a solubilizing agent.

Nonionic surfactants particularly produced by block addition polymerization with ethylene oxide and propylene oxide (hereinafter, also referred to as block-type nonionic surfactants) are known to have controlled HLB as desired by simply controlling addition mole numbers, and from the point of physical properties, to exhibit good operability as having low freezing point and being in the liquid state within the wide range of temperature (JP-A-H010-212491, published on Aug. 11, 1998).

For nonionic surfactants, in addition to properties of a surfactant such as emulsifying capacity and permeability, improvement in qualities such as hue, scent, and stability are also important. There have been various proposed methods for producing an alkylene oxide-adduct with a long-chain alcohol having improved qualities in the past. For example, JP-A2000-344702 discloses that a nonionic surfactant having good stability of appearance with small amount of by-products is produced by addition of an alkoxylating catalyst, adjustment of a water content in a liquid phase of the reactant, and subsequent removal of the catalyst by filtration.

JP H10-296068 describes a dispersion stabilizer for organic powder, which consists of a nonionic surfactant of the formula RO-(EO)x-(PO)y-(EO)z-H, wherein R denotes a 8-22 C aliphatic hydrocarbon group, EO denotes an oxyethylene group and PO denotes an oxypropylene group, x denotes a number of 1-20, y denotes number of 1-10 and z denotes number of 1-20.

EP 1 120 457 relates to a nonionic surfactant which is directly produced by causing an aliphatic alcohol (a1) to add an alkylene oxide (b1), is represented by the general formula R10-(C2H40)m/(AO)n-(C2H40)p-H, and has a value of Mw/Mn in a specific range, wherein the distribution of the addition numbers fulfills a specific formula.

EP 0 398 450 relates to alkylene oxide adducts of organic compounds having active hydrogen atoms, which are prepared by a process which comprises contacting and reacting an alkylene oxide reactant comprising one or more vicinal alkylene oxides with an active hydrogen containing reactant comprising one or more compounds having active hydrogen atoms in the presence of a catalytically effective amount of the compound barium phosphate.

WO 2008/088647 is directed to surfactant compositions that include one or more nonionic surfactants derived from seed oils and having a mixture of at least 8, 10 and 12 carbon atom linear alkyl moieties, which find use in a number of end use applications as substitutes for petroleum derived surfactants.

### Summary of the invention

The present invention relates to a method for producing a nonionic surfactant, including the following steps (I), (II), and (III).

### <Step (I)>

step of reacting an alcohol represented by formula (1) having a water content of not more than 0.1% by mass with ethylene oxide in the presence of a catalyst to obtain an ethylene oxide-adduct represented by formula (2):

R-OH (1)

wherein, R represents a linear or branched alkyl group having 8 to 24 carbon atoms;

R-O- (EO)ₓ-H (2)

wherein, R represents a linear or branched alkyl group having 8 to 24 carbon atoms; EO represents an ethyleneoxy group; and x represents an average EO addition mole number ranging 1 ≤ x ≤ 20;

### <Step (II)>

step of reacting the ethylene oxide-adduct represented by formula (2) obtained in the step (I) with propylene oxide to obtain an alkylene oxide-adduct represented by formula (3) having a content of remaining propylene oxide of not more than 1000 mg/kg:

R-O- (EO)ₓ- (PO)_{y}-H (3)

wherein, R represents a linear or branched alkyl group having 8 to 24 carbon atoms; EO represents an ethyleneoxy group; x represents an average EO addition mole number ranging 1 ≤ x ≤ 20; PO represents a propyleneoxy group; and y represents an average PO addition mole number ranging 1 ≤ y ≤ 10;

### <Step (III)>

step of reacting the alkylene oxide-adduct obtained in the step (II) with ethylene oxide to obtain a nonionic surfactant represented by formula (4) having contents of remaining ethylene oxide and remaining propylene oxide, respectively, of not more than 5 mg/kg:

R-O-(EO)ₓ-(PO)_{y}-(EO)_{z}-H (4)

wherein, R represents a linear or branched alkyl group having 8 to 24 carbon atoms; EO represents an ethyleneoxy group; x represents an average EO addition mole number ranging 1 ≤ x ≤ 20; PO represents a propyleneoxy group; y represents an average PO addition mole number ranging 1 ≤ y ≤10; and z represents an average EO addition mole number ranging 1 ≤ z ≤ 20.

### Detailed description of the Invention

In conventional techniques, there has been no sufficient discussion on efficient methods of producing a block-type nonionic surfactant with a good hue and appearance, and high purity.

The present invention provides a method for producing a block-type nonionic surfactant having a good hue and appearance and high purity.

In the present invention, the product mixture containing the alkylene oxide-adduct obtained in the step (II) has a content of remaining propylene oxide of not more than 1000 mg/kg before the step (III). After the step (II), the product mixture is reacted with ethylene oxide in the step (III).

In the present invention, the contents of water, remaining propylene oxide, and remaining ethylene oxide are limited as described above.

### <Step (I) >

The step (I) contains reacting an alcohol represented by formula (1) having a water content of not more than 0.1% by mass with ethylene oxide in the presence of a catalyst to obtain an ethylene oxide-adduct represented by formula (2):

R-OH (1)

wherein, R represents a linear or branched alkyl group having 8 to 24 carbon atoms;

R-O- (EO)ₓ-H (2)

wherein, R represents a linear or branched alkyl group having 8 to 24 carbon atoms; EO represents an ethyleneoxy group; and x represents an average EO addition mole number ranging 1 ≤ x ≤ 20.

From the point of ease of handling, in formula (1), R preferably has 8 to 18 carbon atoms, and more preferably 8 to 16 carbon atoms. From the points of detergency and stability of appearance at low temperature, x preferably ranges from 4 to 14, and more preferably 5 to 12.

In the method of the present invention, a nonionic surfactant having no problem in appearance such as clouding can be produced, if the alcohol represented by formula (1) just has a water content of not more than 0.1% by mass in the reaction with ethylene oxide in the presence of a catalyst. The water content of the alcohol represented by formula (1) thus has no limitation when it is fed. In the reaction with ethylene oxide, the water content of the alcohol represented by formula (1) is preferably 0 to 0.08% by mass, more preferably 0 to 0.06% by mass, and even more preferably 0 to 0.05% by mass. When the water content is more than 0.1% by mass in the reaction, a dehydration treatment should be introduced to adjust the water content. Dehydration may be performed, for example, by holding the reaction system including the alcohol and the catalyst for 0.1 hours or longer at 80 to 150°C under a reduced pressure of 1 to 10 kPa to distill off water. During the dehydration treatment, an inert gas may also be introduced/distilled to decrease moisture in the reaction system. The water content of the alcohol can be measured by the Karl Fischer method or the like.

A catalyst used can be an acid catalyst or an alkali catalyst. From the point of simple purification after the reaction, an alkali catalyst is preferably used. Examples of the acid catalyst include Bronsted acids such as sulfuric and phosphoric acids and Lewis acids such as stannic chloride and boron trifluoride. Examples of the alkali catalyst include tertiary amines, hydroxides of alkaline and alkaline earth metals, and quaternary ammonium i.e. sodium hydroxide, potassium hydroxide, ammonium hydroxide, calcium hydroxide, barium hydroxide or the like, and alkaline metal carbonates such as potassium carbonate and sodium carbonate. Among these catalysts, preferably used are hydroxides of alkaline metal and alkaline earth metal, more preferably alkaline metal hydroxides, and even more preferably sodium hydroxide and potassium hydroxide. An amount of the catalyst used is preferably 0.1 to 5% by mole relative to 1 mole of the alcohol represented by formula (1). The catalyst can be added in any form. It may be added in the solid form for reducing water together introduced in the reaction system, or may in a form of aqueous solution from the point of ease of handling the catalyst. When the water content of the alcohol of formula (1) is more than 0.1% by mass through the addition of the catalyst, the dehydration treatment as described above is required before adding ethylene oxide.

The amount of ethylene oxide used may be appropriately adjusted within the range from a 1- to 20-folds molar amount relative to the amount of the alcohol represented by formula (1), according to a nonionic surfactant to be produced, and further preferably a 4- to 14-fold molar amount, and even more preferably a 5- to 12-fold molar amount.

Ethylene oxide can be added through any mode. The addition mode may be collective, portionwise, continuous, or combinations thereof.

The reaction of the alcohol represented by formula (1) with ethylene oxide can be performed by adding ethylene oxide to the alcohol at 50 to 200°C, and preferably at 100 to 160°C in the presence of a catalyst.

Since ethylene oxide is in the gas state within the temperature range as above, the addition polymerization is preferably performed under a pressurized atmosphere in a closed vessel. A reaction pressure is preferably an ambient pressure to 0.8 MPa. Although a reaction time is not specifically limited, for reducing unreacted ethylene oxide, the reaction is preferably performed for 0.1 to 3 hours after ethylene oxide has been fed. The reaction is preferably performed for 0.1 to 3 hours after introduction of whole ethylene oxide at a reaction temperature of 50 to 200°C, and more preferably 100 to 160°C.

The reaction is specifically performed as follows: placing the alcohol represented by formula (1) and an alkali catalyst in a pressure tight reactor having introduction means for ethylene oxide and for propylene oxide; holding the reaction system at 80 to 150°C under 1 to 10 kPa to remove water until the water content of the alcohol decreases to a given value; conducting nitrogen-replacing and elevating the temperature to 50 to 200°C; adding a given amount of ethylene oxide to the reaction system; conducting the reaction for 0.1 to 3 hours at 50 to 200°C to obtain an ethylene oxide-adduct. For the pressure tight reactor, an autoclave equipped with a stirrer, a temperature controller, and an automatic introduction device and the like may be used.

### <Step (II) >

The step (II) is a step of reacting the ethylene oxide-adduct represented by formula (2) obtained in the step (I) with propylene oxide to obtain an alkylene oxide-adduct represented by formula (3), which has a content of remaining propylene oxide of not more than 1000 mg/kg. In the step (II), the alkylene oxide-adduct having the content of remaining propylene oxide of not more than 1000 mg/kg may be produced through adjusting conditions in the reaction of the ethylene oxide-adduct represented by formula (2) of step (II) with propylene oxide. Alternatively, after the alkylene oxide-adduct has been obtained, the alkylene oxide-adduct having the content of remaining propylene oxide of not more than 1000 mg/kg may be produced by reducing propylene oxide in the product of the reaction.

R-O- (EO)ₓ-(PO)_{y}-H (3)

wherein, R represents a linear or branched alkyl group having 8 to 24 carbon atoms; EO represents an ethyleneoxy group; x represents an average EO addition mole number ranging 1 ≤ x ≤ 20; PO represents a propyleneoxy group; and y represents an average PO addition mole number ranging 1 ≤ y ≤ 10.

From the points of detergency and stability at low temperature, in formula (3), y is preferably 1 to 4.

The reaction of the ethylene oxide-adduct represented by formula (2) obtained in the step (I) with propylene oxide can be essentially performed in the same way as in the step (I). Catalysts usable in the step (II) are the same as catalysts described in the step (I). In the step (II), an additional catalyst may be used or not. When an additional catalyst is used, it may be of the same or different kind of the catalyst used in the step (I). When a water content of the ethylene oxide-adduct represented by formula (2) is over 0.1% by mass through addition of the additional catalyst for the reaction with propylene oxide, the dehydration treatment as described in step (I) is preferably performed before adding propylene oxide.

The amount of propylene oxide used may be appropriately adjusted within the range from a 1- to 10-fold molar amount relative to the amount of the alcohol represented by formula (1), according to a nonionic surfactant to be produced., and more preferably a 1- to 4-fold molar amount.

Propylene oxide can be added through any mode. The addition mode may be collective, portionwise, continuous, or combinations thereof.

From the viewpoints of the qualities of the resultant nonionic surfactant such as hue and scent and reaction rate with the ethylene oxide-adduct, propylene oxide is added to the reaction system at 100 to 160°C, and more preferably 110 to 130°C. The reaction is preferably performed for 1 to 5 hours after addition of whole propylene oxide at 100 to 160°C and more preferably at 110 to 130°C.

Since propylene oxide is in a gas state within the temperature range as above, the addition polymerization is preferably performed under a pressurized atmosphere in a closed vessel. A reaction pressure is preferably an ambient pressure to 0.8 MPa.

In step (II), an alkylene oxide-adduct having a content of remaining propylene oxide of not more than 1000 mg/kg is obtained. It is achieved, for example, by a process of progressing the reaction of the ethylene oxide-adduct represented by formula (2) with propylene oxide to a sufficient degree (process 1), a process of reducing an amount of propylene oxide in the reaction system after the reaction in the step (II) between the ethylene oxide-adduct and propylene oxide has been conducted (process 2) or combination of the processes 1 and 2. Whether the reaction is stopped or continued can be determined by checking an amount of propylene oxide in the alkylene oxide-adduct according to need. The amount of propylene oxide in the alkylene oxide-adduct can be determined through a measurement of a reaction mixture by headspace gas chromatography (HS-GC).

For the process 1, to progress the reaction of the ethylene oxide-adduct represented by formula (2) with propylene oxide to a sufficient degree, a temperature in the reaction system is preferably hold to 100 to 160°C, and preferably to 110 to 130°C for 1 to 5 hours after addition of propylene oxide. Under conditions for the kind of alkyl group and the ethylene oxide addition mole number of the ethylene oxide-adduct represented by formula (2) obtained in the step (I) as a starting material of this step, the kind and the amount of catalyst used in this step, and the addition mole number of propylene oxide as defined in the present invention, this process will produce an alkylene oxide-adduct having a content of remaining propylene oxide of not more than 1000 mg/kg.

For the process 2, to reduce an amount of propylene oxide in the reaction system, an introduction/removal of an inert gas in an air phase and/or a liquid phase may be employed. The operation for reducing an amount of propylene oxide may be performed under ambient, compressed or reduced pressure.

The step (II) may include stages of reacting the ethylene oxide-adduct represented by formula (2) obtained in the step (I) with propylene oxide to obtain an alkylene oxide-adduct represented by formula (3) and of reducing a content of remaining propylene oxide of the alkylene oxide-adduct to not more than 1000 mg/kg. Alternatively, the step (II) may include a stage of reacting the ethylene oxide-adduct represented by formula (2) obtained in the step (I) with propylene oxide to obtain an alkylene oxide-adduct represented by formula (3) having a content of remaining propylene oxide of not more than 1000 mg/kg, that will be used as is in the step (III).

The content of remaining propylene oxide in the alkylene oxide-adduct represented by formula (3) is preferably not more than 1000 mg/kg, more preferably not more than 900 mg/kg, even more preferably not more than 700 mg/kg, and still even more preferably not more than 500 mg/kg. From the viewpoints of hue and appearance of final nonionic surfactant product, the less content of remaining propylene oxide in the alkylene oxide-adduct represented by formula (3) is the more preferred. From the viewpoint of production efficiency, the content is allowed to be not less than 50 mg/kg, and more particularly not less than 100 mg/kg. Even from the starting material having such a content, a substantially colorless product can be produced.

In production of a nonionic surfactant by adding ethylene oxide, propylene oxide, and ethylene oxide in this order to an alcohol as for the nonionic surfactant represented by formula (4), it is not known conventionally that the content of remaining propylene oxide in an alkylene oxide-adduct of the step (II), which is a reaction product during the course of production (intermediate), influences hue and appearance of a final nonionic surfactant. It is a remarkable advantage, found by the inventors, that the content specifically set to not more than 1000 mg/kg efficiently provides a nonionic surfactant with a good hue and appearance.

Since the step (II) follows to the step (I), the step (II) is generally performed in a reactor used in the step (I) as is. The process 1 is specifically performed as follows: introducing a given amount of propylene oxide to the ethylene oxide-adduct obtained in the step (I) at 0.01 to 0.6 MPa with controlling a temperature of the ethylene oxide-adduct to 100 to 160°C; and holding the reaction system to 100 to 160°C for 1 to 5 hours after addition of whole propylene oxide to obtain an alkylene oxide-adduct represented by formula (3) having a content of remaining propylene oxide of not more than 1000 mg/kg.

### <Step (III) >

The step (III) is a step of reacting the alkylene oxide-adduct obtained in the step (II) with ethylene oxide to obtain a nonionic surfactant represented by formula (4) which has each content of remaining ethylene oxide and remaining propylene oxide of not more than 5 mg/kg:

R-O-(EO)_{X}-(PO)_{y}-(EO)_{z}-H (4)

wherein, R represents a linear or branched alkyl group having 8 to 24 carbon atoms; EO represents an ethyleneoxy group; x represents an average EO addition mole number ranging 1 ≤ x ≤ 20; PO represents a propyleneoxy group; y represents an average PO addition mole number ranging 1 ≤ y ≤ 10; and z represents an average EO addition mole number ranging 1 ≤ z ≤ 20.

From the point of stability of appearance at low temperature, in formula (4), z is preferably 4 to 14, and more preferably 5 to 12.

In the step (III), the reaction of the alkylene oxide-adduct with ethylene oxide can be performed employing the same other materials and reaction conditions, and preferred embodiments of them as those in the step (I), except that used is the alkylene oxide-adduct represented by formula (3) prepared from the alcohol represented by formula (1). Since the step (III) follows to the steps (I) and (II), the step (III) is generally performed in the same reactor used in these steps as is. The step (III) is specifically performed as follows: introducing a given amount of ethylene oxide in the reaction system containing the alkylene oxide-adduct obtained in the step (II) at 0.01 to 0.6 MPa; and reacting for 0.1 to 4 hours at 50 to 200°C to obtain a nonionic surfactant represented by formula (4).

In the step (III), an additional feeding of the catalyst may be used or not. When the catalyst is added, it may be the same as or a different kind from the catalyst used in the step (I). When the catalyst is added in the reaction with ethylene oxide and the water content of the alkylene oxide-adduct represented by formula (3) is more than 0.1% by mass, the dehydration treatment as described in step (I) is preferably performed before adding ethylene oxide.

In step (III), a nonionic surfactant having the contents of remaining ethylene oxide and remaining propylene oxide, respectively, of not more than 5 mg/kg is obtained. It can be preferably achieved by reducing the amounts of ethylene oxide and propylene oxide in the reaction system after the reaction of the alkylene oxide-adduct represented by formula (3) with ethylene oxide in the step (III). Specifically, a process of holding the reaction system at 50 to 200°C, and preferably 50 to 160°C under a reduced pressure of 1 to 10 kPa may be included. Whether the operation is stopped or continued can be determined by checking amounts of ethylene oxide and propylene oxide in the nonionic surfactant according to need.

After the step (III), an after-treatment of the catalyst used in the steps (I) to (III) may be performed according to need. The after-treatment can be performed by any method. Examples of the after-treatment include, for an alkali catalyst, addition of water and a mineral acid such as hydrochloric or phosphoric acids or an organic acid such as acetic acid to the reaction liquid to form a neutralized salt, the addition and a subsequent dehydration and drying to precipitate the catalyst salt and filtration thereof, adsorption and removal of the catalyst or a neutralized salt thereof by contacting the reaction liquid with an adsorbent, extraction of the catalyst from the reaction liquid with water or water and an organic solvent, and ion-exchanging removal of the catalyst with an ion-exchange resin. Among these methods, from the point of simplicity of the step, preferred is a method of adding an appropriate neutralizer to form a neutralized salt of the catalyst.

The nonionic surfactant produced according to the present invention preferably has a Hazen color value (APHA) of not more than 100, more preferably not more than 80, and even more preferably not more than 60, as a measure of a good hue.

From the points of hue, scent, and purity of active agent, the nonionic surfactant produced according to the present invention preferably has an Iodine value of 0.05 to 0.5 gI₂/100g. An Iodine value can be adjusted by controlling an amount of remaining propylene oxide in the step (II).

From the point of stability of appearance, a content of by-product in the nonionic surfactant produced according to the present invention, in particular the content of polyalkylene glycol is preferably 0.1 to 1% by mass, and more preferably 0.1 to 0.8% by mass. The content of polyalkylene glycol can be adjusted by controlling a water content in the step (I).

The nonionic surfactant produced according to the present invention preferably has a clear appearance. As used herein, "clear" refers that a sample has a transmittance of not less than 97.0% at 700 nm when measured at 20°C.

### Examples

The following Examples demonstrate the present invention. These Examples are intended to illustrate the present invention and not to limit the present invention.

### Example 1

### <Step (I)>

In an autoclave equipped with a stirrer, a temperature controller, and an automatic feeder, 252.2 g of alcohol having 12 carbon atoms (trade name: Kalcol 2098, Kao Corporation), 98.2 g of alcohol having 14 carbon atoms (trade name: Kalcol 4098, Kao Corporation) and 3.0 g of KOH were introduced to be dehydrated for 30 minutes at 110°C under 1.3 kPa. A water content of the resultant compound after the dehydration is shown in Table 1. Then, the inner atmosphere of the autoclave was replaced with nitrogen. At an elevated temperature to 155°C, to the reaction mixture was added 715.7 g (9 molar to the alcohol, on the assumption that an average molecular weight of the alcohol was 194.2 (1.8 mol)) of ethylene oxide (in Table 1, referred to as EO) and, after the feeding, it was reacted for 30 minutes at 155°C to obtain an ethylene oxide-adduct having an average addition mole number of 9.

### <Step (II)>

To the ethylene oxide-adduct obtained in the step (I) cooled to 130°C was added 209.7 g (2 molar to the alcohol) of propylene oxide (in Table 1, referred to as PO) and, after the feeding, it was reacted for 3 hours at 130°C to obtain an alkylene oxide-adduct (ethylene oxide/propylene oxide block adduct) having average addition mole numbers of ethylene oxide and propylene oxide of 9 and 2, respectively. Measurement of the alkylene oxide-adduct with an Agilent headspace gas chromatography (hereinafter, referred to as HS-GC) showed that an amount of unreacted propylene oxide in the adduct was 300 mg/kg.

### <Step (III)>

To the alkylene oxide-adduct obtained in the step (II) heated to 155°C was added 715.7 g (9 molar to the alcohol) of ethylene oxide and reacted for 2 hours at 155°C. The reaction mixture was cooled to 80°C, and hold at 2.7 kPa for 30 minutes for removing unreacted ethylene oxide and propylene oxide. Amounts of remaining ethylene oxide and propylene oxide are shown in Table 1. Then, to the autoclave was added 6.0 g of 90% lactic acid. The mixture was stirred for 30 minutes at 80°C and extracted to obtain a nonionic surfactant having average addition mole numbers of ethylene oxide, propylene oxide, and ethylene oxide of 9, 2, and 9, respectively.

### <Evaluation>

A nonionic surfactant was evaluated for hue, Iodine value, content of polyalkylene glycol, and appearance according to the following methods. Results are shown in Table 1.

### (1) Hue

Hue was measured with a colorimeter for petroleum products OME2000 (Nippon Denshoku Industries Co.,Ltd).

### (2) Iodine value

An Iodine value was measured according to the Wijs method that is known as a standard method for measuring an Iodine value of fats and oils and derivatives thereof.

### (3) Polyalkylene glycol (PAG) content

A polyalkylene glycol content was measured by high performance liquid chromatography (HPLC). Used was an HPLC system including a differential refractometer (Tosoh Corporation), a column L-column ODS (inner diameter: 4.6 mm, length: 150 mm) (Chemicals Evaluation and Research Institute, Japan), and a column Shodex SB802.5HQ (inner diameter: 8 mm, length: 300 mm) (Showa Denko K.K.).

### (4) Appearance

A product appearance was evaluated by measuring a transmittance at 700 nm. A product was put in a quartz cell having an optical path length of 1 cm and measured for transmittance at 700 nm with a spectrophotometer UV-1600 (Shimadzu corporation). A measuring temperature (sample temperature) was 20°C. A sample having a transmittance of not less than 97.0% was rated as "clear" and a sample less than 97.0% as "cloudy".

### Examples 2 to 7 and Comparative Examples 1 to 3

Nonionic surfactants were prepared with modified conditions of Example 1 as shown in Table 1, and evaluated in the same way as in Example 1. Results are shown in Table 1.

**[Table 1]**

| | | Example | | | | | | | Comparative example | | |
|---|---|---|---|---|---|---|---|---|---|---|---|
| | | 1 | 2 | 3 | 4 | 5 | 6 | 7 | 1 | 2 | 3 |
| Step (I) | Water content in alcohol (% by mass) | 0.05 | 0.03 | 0.04 | 0.07 | 0.03 | 0.05 | 0.05 | 0.05 | 0.04 | 0.12 |
| | fed EO mol amount (relative to alcohol) | 9 | 11 | 7 | 9 | 5 | 9 | 10 | 9 | 9 | 9 |
| | Reaction temperature (°C) | 155 | 155 | 155 | 145 | 140 | 155 | 155 | 155 | 155 | 155 |
| | Reaction time (h) | 0.5 | 0.5 | 0.5 | 0.5 | 0.5 | 0.5 | 0.5 | 0.5 | 0.5 | 0.5 |
| Step (II) | fed PO amount (relative to alcohol) | 2 | 2 | 1.5 | 3 | 2 | 2 | 2 | 2 | 2 | 2 |
| | Reaction temperature (°C) | 130 | 125 | 115 | 130 | 120 | 135 | 125 | 125 | 130 | 125 |
| | Reaction time (h) | 3 | 3 | 2 | 1 | 4 | 2 | 1 | 0.5 | 1 | 3 |
| | Unreacted PO amount (mg/kg) | 300 | 250 | 600 | 700 | 100 | 300 | 900 | 3000 | 1500 | 300 |
| Step (III) | fed EO mol amount (relative to alcohol) | 9 | 11 | 7 | 9 | 5 | 9 | 10 | 9 | 9 | 9 |
| | Reaction temperature (°C) | 155 | 155 | 155 | 155 | 140 | 145 | 155 | 145 | 155 | 145 |
| | Reaction time (h) | 2 | 2 | 2 | 1 | 2 | 2 | 2 | 0.5 | 1.5 | 2 |
| | Unreacted EO amount (mg/kg) | Less than 0.1 | Less than 0.1 | Less than 0.1 | 1 | 0.9 | Less than 0.1 | Less than 0.1 | 10 | Less than 0.1 | Less than 0.1 |
| | Unreacted PO amount (mg/kg) | 0.5 | 1.0 | 2.0 | 1.3 | 1.0 | 0.5 | 1.0 | 8 | 0.8 | 0.6 |
| Nonionic surfactant | Hue(APHA) | 44 | 30 | 63 | 61 | 30 | 82 | 45 | 120 | 90 | 53 |
| | Iodine value (g12/100g) | 0.18 | 0.10 | 0.20 | 0.27 | 0.10 | 0.31 | 0.17 | 0.42 | 0.36 | 0.23 |
| | PAG content (% by mass) | 0.8 | 0.6 | 0.7 | 1.3 | 0.6 | 1.0 | 0.8 | 0.8 | 0.7 | 2.0 |
| | Appearance (20°C) | Clear | Clear | Clear | Clear | Clear | Clear | Clear | Clear | Clear | Cloudy |

## Claims

1. A method for producing a nonionic surfactant, comprising the following steps (I), (II), and (III) :
<Step (I)>
reacting an alcohol represented by formula (1) having a water content of not more than 0.1% by mass with ethylene oxide in the presence of a catalyst to obtain an ethylene oxide-adduct represented by formula (2) :
R-OH (1)
wherein, R represents a linear or branched alkyl group having 8 to 24 carbon atoms;
R-O-(EO)ₓ-H (2)
wherein, R represents a linear or branched alkyl group having 8 to 24 carbon atoms; EO represents an ethyleneoxy group; and x represents an average EO addition mole number ranging 1 ≤ x ≤ 20;
<step (II) >
reacting the ethylene oxide-adduct represented by formula (2) obtained in the step (I) with propylene oxide to obtain an alkylene oxide-adduct represented by formula (3) having a content of remaining propylene oxide of not more than 1000 mg/kg:
R-O- (EO)ₓ-(PO)_{y}-H (3)
wherein, R represents a linear or branched alkyl group having 8 to 24 carbon atoms; EO represents an ethyleneoxy group; x represents an average EO addition mole number ranging 1 ≤ x ≤ 20; PO represents a propyleneoxy group; and y represents an average PO addition mole number ranging 1 ≤ y ≤ 10; and
<step (III)>
reacting the alkylene oxide-adduct obtained in the step (II) with ethylene oxide to obtain a nonionic surfactant represented by formula (4) having contents of remaining ethylene oxide and remaining propylene oxide, respectively, of not more than 5 mg/kg:
R-O-(EO)ₓ-(PO)_{y}-(EO)_{z}-H (4)
wherein, R represents a linear or branched alkyl group having 8 to 24 carbon atoms; EO represents an ethyleneoxy group; x represents an average EO addition mole number ranging 1 ≤ x ≤ 20; PO represents a propyleneoxy group; y represents an average PO addition mole number ranging 1 ≤ y ≤ 10; and z represents an average EO addition mole number ranging 1 ≤ z ≤ 20.

2. The method for producing a nonionic surfactant according to claim 1, wherein the reaction of the alcohol with ethylene oxide in the step (I) is performed at 50 to 200°C; the reaction of the ethylene oxide-adduct with propylene oxide in the step (II) is performed at 100 to 160°C; and the reaction of the alkylene oxide-adduct with ethylene oxide in the step (III) is performed at 50 to 200°C

3. The method for producing a nonionic surfactant according to claim 1 or 2, wherein the reaction of the step (II) is continued for 1 to 5 hours at 100 to 160°C after addition of the whole amount of propylene oxide.

4. The method for producing a nonionic surfactant according to any one of claims 1 to 3, further comprising a step of reducing ethylene oxide and propylene oxide in the reaction system after the reaction of the alkylene oxide-adduct with ethylene oxide in the step (III).

5. The method for producing a nonionic surfactant according to any one of claims 1 to 4, wherein R in formula (1) has 8 to 16 carbon atoms.

6. The method for producing a nonionic surfactant according to any one of claims 1 to 5, wherein R in formula (1) is a linear alkyl group.

7. The method for producing a nonionic surfactant according to any one of claims 1 to 6, wherein x in the formula (2) ranges from 5 to 12.

8. The method for producing a nonionic surfactant according to any one of claims 1 to 7, wherein y in the formula (3) is from 1 to 4.

9. The method for producing a nonionic surfactant according to any one of claims 1 to 8, wherein the nonionic surfactant represented by formula (4) is produced by adding ethylene oxide, propylene oxide, and ethylene oxide in this order to an alcohol.

10. The method for producing a nonionic surfactant according to any one of claims 1 to 9, wherein the reaction in the step (II) is conducted at 110 to 130°C and the reaction in step (III) is conducted at 50 to 160°C under a reduced pressure of 1 to 10 kPa.

## Patentansprüche

1. Verfahren zur Herstellung eines nicht-ionischen Tensids, umfassend die nachstehenden Schritte (I), (II) und (III):
Schritt (I):
Umsetzen eines Alkohols der Formel (1) mit einem Wassergehalt von nicht mehr als 0,1 Masse-% mit Ethylenoxid in Gegenwart eines Katalysators, um ein Ethylenoxid-Addukt der Formel (2) zu erhalten:
R-OH (1)
worin R eine geradkettige oder verzweigte Alkylgruppe mit 8 bis 24 Kohlenstoffatomen darstellt:
R-O-(EO)ₓ-H (2)
worin R eine geradkettige oder verzweigte Alkylgruppe mit 8 bis 24 Kohlenstoffatomen darstellt, EO eine Ethylenoxidgruppe darstellt und x eine durchschnittliche Additions-Molzahl von EO im Bereich von 1 ≤ x ≤ 20 darstellt;
Schritt (II):
Umsetzen des in Schritt (I) erhaltenen Ethylenoxid-Addukts der Formel (2) mit Propylenoxid, um ein Alkylenoxid-Addukt der Formel (3) mit einem Gehalt an verbliebenem Propylenoxid von nicht mehr als 1.000 mg/kg zu erhalten:
R-O-(EO)ₓ-(PO)_{y}-H (3)
worin R eine geradkettige oder verzweigte Alkylgruppe mit 8 bis 24 Kohlenstoffatomen darstellt; EO eine Ethylenoxidgruppe darstellt; x eine durchschnittliche Additions-Molzahl von EO im Bereich von 1 ≤ x ≤ 20 darstellt; PO eine Propylenoxygruppe darstellt und y eine durchschnittliche Additions-Molzahl von PO im Bereich von 1 ≤ y ≤ 10 darstellt; und
Schritt (III):
Umsetzen des in Schritt (II) erhaltenen Alkylenoxid-Addukts mit Ethylenoxid, um ein nicht-ionisches Tensid der Formel (4) mit einem Gehalt an verbliebenem Ethylenoxid bzw. verbliebenem Propylenoxid von nicht mehr als 5 mg/kg zu erhalten:
R-O-(EO)ₓ-(PO)_{y}-(EO)_{z}-H (4)
worin R eine geradkettige oder verzweigte Alkylgruppe mit 8 bis 24 Kohlenstoffatomen darstellt; EO eine Ethylenoxygruppe darstellt; x eine durchschnittliche Additions-Molzahl von EO im Bereich von 1 ≤ x ≤ 20 darstellt; PO eine Propylenoxygruppe darstellt; y eine durchschnittliche Additions-Molzahl von PO im Bereich von 1 ≤ y ≤ 10 darstellt und z eine durchschnittliche Additions-Molzahl von EO im Bereich von 1 ≤ z < 20 darstellt.

2. Verfahren zur Herstellung eines nicht-ionischen Tensids gemäss Anspruch 1, wobei die Umsetzung des Alkohols mit Ethylenoxid in Schritt (I) bei 50 bis 200°C durchgeführt wird; die Umsetzung des Ethylenoxid-Addukts mit Propylenoxid in Schritt (II) bei 100 bis 160°C durchgeführt wird; und die Umsetzung des Alkylenoxid-Addukts mit Ethylenoxid in Schritt (III) bei 50 bis 200°C durchgeführt wird.

3. Verfahren zur Herstellung eines nicht-ionischen Tensids gemäss Anspruch 1 oder 2, wobei die Umsetzung in Schritt (II) nach Zugabe der gesamten Menge an Propylenoxid für 1 bis 5 Stunden bei 100 bis 160°C fortgeführt wird.

4. Verfahren zur Herstellung eines nicht-ionischen Tensids gemäss irgendeinem der Ansprüche 1 bis 3, das ferner einen Schritt umfasst, in dem Ethylenoxid und Propylenoxid nach Umsetzung des Alkylenoxid-Addukts mit Ethylenoxid in Schritt (III) in dem Reaktionssystem reduziert werden.

5. Verfahren zur Herstellung eines nicht-ionischen Tensids gemäss irgendeinem der Ansprüche 1 bis 4, worin R in Formel (1) 8 bis 16 Kohlenstoffatome aufweist.

6. Verfahren zur Herstellung eines nicht-ionischen Tensids gemäss irgendeinem der Ansprüche 1 bis 5, worin R in Formel (1) eine geradkettige Alkylgruppe ist.

7. Verfahren zur Herstellung eines nicht-ionischen Tensids gemäss irgendeinem der Ansprüche 1 bis 6, worin x in Formel (2) im Bereich von 5 bis 12 liegt.

8. Verfahren zur Herstellung eines nicht-ionischen Tensids gemäss irgendeinem der Ansprüche 1 bis 7, worin y in Formel (3) 1 bis 4 beträgt.

9. Verfahren zur Herstellung eines nicht-ionischen Tensids gemäss irgendeinem der Ansprüche 1 bis 8, wobei das nicht-ionische Tensid der Formel (4) durch Zugabe von Ethylenoxid, Propylenoxid und Ethylenoxid, in dieser Reihenfolge, zu einem Alkohol hergestellt wird.

10. Verfahren zur Herstellung eines nicht-ionischen Tensids gemäss irgendeinem der Ansprüche 1 bis 9, wobei die Umsetzung in Schritt (II) bei 110 bis 130°C durchgeführt wird und die Umsetzung in Schritt (III) bei 50 bis 160°C unter einem reduziertem Druck von 1 bis 10 kPa durchgeführt wird.

## Revendications

1. Procédé de production d'un tensioactif non ionique, comprenant les étapes suivantes (I), (II), et (III) :
< étape (I) >
la réaction d'un alcool représenté par la formule (1) ayant une teneur en eau de pas plus de 0,1% en masse avec de l'oxyde d'éthylène en présence d'un catalyseur pour obtenir un produit d'addition d'oxyde d'éthylène représenté par la formule (2) :
R-OH (1)
où, R représente un groupe alkyle linéaire ou ramifié ayant 8 à 24 atomes de carbone ;
R-O-(EO)ₓ-H (2)
où, R représente un groupe alkyle linéaire ou ramifié ayant 8 à 24 atomes de carbone ; EO représente un groupe éthylèneoxy ; et x représente un nombre de moles moyen d'addition d'EO satisfaisant 1 ≤ x ≤ 20 ;
< étape (II) >
la réaction du produit d'addition d'oxyde d'éthylène représenté par la formule (2) obtenu à l'étape (I) avec de l'oxyde de propylène pour obtenir un produit d'addition d'oxyde d'alkylène représenté par la formule (3) ayant une teneur en oxyde de propylène restant de pas plus de 1000 mg/kg :
R-O-(EO)ₓ-(PO)_{y}-H (3)
où, R représente un groupe alkyle linéaire ou ramifié ayant 8 à 24 atomes de carbone ; EO représente un groupe éthylèneoxy ; x représente un nombre de moles moyen d'addition d'EO satisfaisant 1 ≤ x ≤ 20 ; PO représente un groupe propylèneoxy ; et y représente un nombre de moles moyen d'addition de PO satisfaisant 1 ≤ y ≤ 10 ; et
< étape (III) >
la réaction du produit d'addition d'oxyde d'alkylène obtenu à l'étape (II) avec de l'oxyde d'éthylène pour obtenir un tensioactif non ionique représenté par la formule (4) ayant des teneurs en oxyde d'éthylène restant et en oxyde de propylène restant, respectivement, de pas plus de 5 mg/kg :
R-O-(EO)ₓ-(PO)_{y}-(EO)_{z}-H (4)
où, R représente un groupe alkyle linéaire ou ramifié ayant 8 à 24 atomes de carbone ; EO représente un groupe éthylèneoxy ; x représente un nombre de moles moyen d'addition d'EO satisfaisant 1 ≤ x ≤ 20 ; PO représente un groupe propylèneoxy ; y représente un nombre de moles moyen d'addition de PO satisfaisant 1 ≤ y ≤ 10 ; et z représente un nombre de moles moyen d'addition d'EO satisfaisant 1 ≤ z ≤ 20.

2. Procédé de production d'un tensioactif non ionique selon la revendication 1, dans lequel la réaction de l'alcool avec de l'oxyde d'éthylène à l'étape (I) est effectuée à une température allant de 50 à 200°C ; la réaction du produit d'addition d'oxyde d'éthylène avec de l'oxyde de propylène à l'étape (II) est effectuée à une température allant de 100 à 160°C ; et la réaction du produit d'addition d'oxyde d'alkylène avec de l'oxyde d'éthylène à l'étape (III) est effectuée à une température allant de 50 à 200°C.

3. Procédé de production d'un tensioactif non ionique selon la revendication 1 ou 2, dans lequel la réaction de l'étape (II) est poursuivie pendant 1 à 5 heures à une température allant de 100 à 160°C après l'addition de la quantité totale d'oxyde de propylène.

4. Procédé de production d'un tensioactif non ionique selon l'une quelconque des revendications 1 à 3, comprenant en outre une étape de réduction d'oxyde d'éthylène et d'oxyde de propylène dans le système de réaction après la réaction du produit d'addition d'oxyde d'alkylène avec de l'oxyde d'éthylène à l'étape (III).

5. Procédé de production d'un tensioactif non ionique selon l'une quelconque des revendications 1 à 4, dans lequel R dans la formule (1) comporte 8 à 16 atomes de carbone.

6. Procédé de production d'un tensioactif non ionique selon l'une quelconque des revendications 1 à 5, dans lequel R dans la formule (1) représente un groupe alkyle linéaire.

7. Procédé dé production d'un tensioactif non ionique selon l'une quelconque des revendications 1 à 6, dans lequel x dans la formule (2) varie de 5 à 12.

8. Procédé de production d'un tensioactif non ionique selon l'une quelconque des revendications 1 à 7, dans lequel y dans la formule (3) varie de 1 à 4.

9. Procédé de production d'un tensioactif non ionique selon l'une quelconque des revendications 1 à 8, dans lequel le tensioactif non ionique représenté par la formule (4) est produit par addition d'oxyde d'éthylène, d'oxyde de propylène, et d'oxyde d'éthylène, dans cet ordre, à un alcool.

10. Procédé de production d'un tensioactif non ionique selon l'une quelconque des revendications 1 à 9, dans lequel la réaction à l'étape (II) est effectuée à une température allant de 110 à 130°C et la réaction à l'étape (III) est effectuée à une température allant de 50 à 160°C sous une pression réduite allant de 1 à 10 kPa.
